(19) Europäisches Patentamt
European Patent Office
Office européen des brevets

(11) EP 2 660 794 B1

(12) EUROPÄISCHE PATENTSCHRIFT

(45) Veröffentlichungstag und Bekanntmachung des Hinweises auf die Patenterteilung:
07.10.2015 Patentblatt 2015/41

(51) Int Cl.:
G08G 1/017 (2006.01)    G07B 15/06 (2011.01)

(21) Anmeldenummer: 13158877.4

(22) Anmeldetag: 13.03.2013

(54) **Verfahren und Vorrichtungen zur Identifizierung eines ortsnutzenden Fahrzeugs**

Method and device for identifying a vehicle using a space

Procédé et dispositifs destinés à l'identification d'un véhicule utilisant un lieu

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **03.05.2012 EP 12166502**

(43) Veröffentlichungstag der Anmeldung:
**06.11.2013 Patentblatt 2013/45**

(73) Patentinhaber: **Kapsch TrafficCom AG 1120 Wien (AT)**

(72) Erfinder:
• **Nagy, Oliver**
  **1190 Wien (AT)**
• **Güner, Refi-Tugrul**
  **2500 Baden (AT)**

(74) Vertreter: **Weiser, Andreas**
  **Patentanwalt**
  **Kopfgasse 7**
  **1130 Wien (AT)**

(56) Entgegenhaltungen:
**EP-A1- 0 401 192    EP-A1- 1 519 320**
**EP-A2- 0 689 169    US-A- 5 686 920**

## Beschreibung

Die vorliegende Erfindung betrifft ein Verfahren zur Identifizierung eines einen vorgegebenen Ort nutzenden Fahrzeugs. Die Erfindung betrifft ferner eine Funkbake und eine Onboard-Unit zur Verwendung in diesem Verfahren.

Verfahren zur Fahrzeugidentifizierung werden beispielsweise zur Aufzeichnung, Kontrolle, Autorisierung und/oder Vermautung (Vergebührung) von Ortsnutzungen von Fahrzeugen benötigt. Solche Ortsnutzungen können beispielsweise der Eintritt in zugangsbeschränkte oder überwachte Bereiche, ein kostenpflichtiger Aufenthalt an einem bestimmten Ort, z.B. ein gebührenpflichtiger Parkplatz, oder das Benützen mautpflichtiger Verkehrswege wie Autobahnen oder Innenstädte (Citymaut) usw. sein. Bei bekannten Verfahren zur Fahrzeugidentifikation werden entweder Fahrzeugkennzeichen (Nummerntafeln) mittels OCR (optical character recognition) gelesen, oder die Fahrzeuge werden wie in der EP 1 519 320 A1 vorgeschlagen mit Onboard-Units (OBUs) ausgestattet, welche eine eindeutige Identifikation haben, die über eine Funkschnittstelle wie DSRC (dedicated short range communication), RFID (radio frequency identification), WLAN (wireless local area network), WAVE (wireless access for vehicular environments) od.dgl. ausgelesen werden kann.

Um eine konkrete Zuordnung einer funkausgelesenen OBU-Identifikation zu dem vom Fahrzeug genutzten Ort zu schaffen, werden derzeit die zum Funkauslesen verwendeten Funkbaken auf speziellen Brücken ("gantries") an den zu überwachenden Ort aufgestellt und mit eng begrenzten Funkabdeckungsbereichen ausgestattet; oder es werden satellitennavigationsgestützte Onboard-Units eingesetzt, die ihre selbstermittelten Positionsdaten über ein Mobilfunknetz an eine Zentrale senden, welche einen Kartenabgleich ("map matching") mit zu überwachenden Orten durchführt. Alle diese bekannten Verfahren benötigen nicht nur spezielle, aufwendige Installationen sowohl im Fahrzeug als auch auf der Straße, sondern offenbaren die Identität der OBU (in Form der funkausgelesenen OBU-Identifikation) auch dann, wenn keine zu überwachende Ortsnutzung vorliegt, was aus Datenschutzgründen bedenklich ist.

Die Erfindung setzt sich zum Ziel, Verfahren und Vorrichtungen der einleitend genannten Art zu schaffen, welche auf einfachere Art und Weise und mit verbesserter Vertraulichkeit für unbeteiligte Fahrzeuge die Identifizierung ortsnutzender Fahrzeuge ermöglicht.

Dieses Ziel wird in einem ersten Aspekt der Erfindung mit einem Verfahren der eingangs genannten Art erreicht, umfassend:

auf dem Fahrzeug Mitführen einer Onboard-Unit, die wiederholt Statusmeldungen über Funk aussendet, welche jeweils einen aktuellen Relativabstand der Onboard-Unit zu dem vorgegebenen Ort und eine nach jeweils einer oder mehreren Statusmeldungen wechselnde Funkkennung angeben,
Empfangen zumindest einer Statusmeldung in einer Funkbake,
Detektieren einer Ortsnutzung des Fahrzeugs durch Auswerten der zumindest einen Statusmeldung anhand des darin angegebenen Relativabstands,
Senden einer Identifikationsanfrage von der Funkbake an die durch die Funkkennung aus der zumindest einen Statusmeldung adressierte Onboard-Unit,
Empfangen und Berechtigungsprüfen der Identifikationsanfrage in der Onboard-Unit und, wenn die Anfrage berechtigt ist, Senden einer über mehrere Funkkennungswechsel gleichbleibenden eindeutigen Identifikation der Onboard-Unit an die Funkbake.

Die Erfindung beruht auf einer neuartigen Integration von Statusmeldungen sendenden Onboard-Units, wie sie beispielsweise in den Standards ITS-G5 oder WAVE (IEEE 802.11p) in Form von z.B. CAM-Nachrichten (common awareness messages) oder BSM-Nachrichten (basic safety messages) definiert sind. Die Nachrichten werden als wiederholte Rundfunksendungen (broadcasts) zur Warnung oder Information von benachbarten Onboard-Units oder straßenseitiger Infrastruktur ausgestrahlt, um Kollisionen zu vermeiden oder dem Fahrer verbesserte Situationsübersicht zu bieten. Um die Erstellung von Bewegungsprofilen eines Fahrzeugs zu erschweren, werden die Statusmeldungen zum Schutz der Privatsphäre nur unter temporären, von Zeit zu Zeit wechselnden und den Systembetreibern nicht bekannten Funkkennungen versandt. Die Erfindung wertet lediglich die temporären Funkkennungen zumindest einer Statusmeldung der Onboard-Units aus. Erst *nachdem* die Ortsnutzung - durch die temporären Funkkennungen anonym - detektiert worden ist, wird die Onboard-Unit zur Deklaration ihrer "wahren" Identität, z.B. Zahlungs-, Anwender- oder Applikationsidentität, aufgefordert. Damit ist sichergestellt, dass tatsächlich nur jene Onboard-Units identifiziert werden, welche den vorgegebenen Ort benutzt haben; Onboard-Units von Drittfahrzeugen, welche den Ort lediglich in der Nähe passieren oder kurz vor der tatsächlichen Ortsnutzung wenden usw., werden nicht identifiziert, d.h. bleiben anonym. Dadurch können hohe Datenschutzanforderungen in Bezug auf Privatsphäre ("privacy") erfüllt werden, ohne dass aufwendige straßenseitige Installationen, OBU-Modifikationen oder gesonderte Anonymisierungseinrichtungen wie Proxy-Rechner erforderlich sind.

Durch die erfindungsgemäße Maßnahme, dass jede Onboard-Unit selbst ihren Relativabstand zu dem vorgegebenen Ort berechnet und das fertige Rechenergebnis an die Funkbake sendet, wird diese von der rechenintensiven Abstandsberechnung entlastet. Die Funkbake braucht nur mehr die Relativabstände auswerten, z.B. auf das Unterschreiten eines vorgegebenen Maximalabstands prüfen, um daraus die Ortsnutzung zu detektieren.

Gemäß einer ersten Ausführungsform der Erfindung wird eine Information über den vorgegebenen Ort von der Funkbake an die Onboard-Unit gesandt und diese berechnet daraus und aus ihrer aktuellen Position den Relativabstand.

Alternativ kann eine Information über den vorgegebenen Ort in der Onboard-Unit gespeichert werden und diese berechnet daraus und aus ihrer aktuellen Position den Relativabstand. Beispielsweise kann jede Onboard-Unit Listen von Aufstellorten von Funkbaken als vorgegebene Orte enthalten, vorgespeichert oder über Funk empfangen, z.B. von Funkbaken distribuiert, und diese Listen zur Ermittlung des Relativabstands zur jeweils nächstgelegenen Funkbake verwenden.

Eine weitere bevorzugte Ausführungsform der Erfindung zeichnet sich dadurch aus, dass zumindest zwei Statusmeldungen in einer Funkbake empfangen und anhand der darin angegebenen Funkkennungen einander zugeordnet werden, und dass die Ortsnutzung des Fahrzeugs durch Auswerten der einander zugeordneten Statusmeldungen anhand der darin angegebenen Relativabstände detektiert wird.

Durch einander Zuordnen und Auswerten zumindest zweier Statusmeldungen wird eine Onboard-Unit über eine kurze Zeit mitverfolgt, die ausreicht, um die Nutzung eines bestimmte Orts mit hoher Sicherheit feststellen zu können. Dazu können bereits zwei oder einige wenige Statusmeldungen genügen, welche ein und derselben Onboard-Unit zugeordnet werden können, um Messfehler ausschließen und eine erfolgte Bewegung hinsichtlich eines zunehmenden oder abnehmenden Relativabstands sicher detektieren zu können. Im einfachsten Fall kann es sich bei einer solcherart detektierten Ortsnutzung um das Übertreten einer vorgegebenen Grenze um den angegebenen Ort handeln, wenn die erste Statusmeldung einen Relativabstand außerhalb der Grenze und die zweite Statusmeldung einen Relativabstand innerhalb der Grenze angibt, um eine Ortsnutzung zu detektieren.

Gemäß einer weiteren bevorzugten Ausführungsform der Erfindung erfolgt das Berechtigungsprüfen durch Überprüfen eines von der Funkbake mit der Identifikationsanfrage mitgesandten kryptographischen Absenderzertifikats der Funkbake. Dadurch offenbart die Onboard-Unit ihre Identität nur identifizierten, berechtigten Fragestellern, was den Schutz der Privatsphäre weiter verstärkt.

Aus demselben Grund ist es besonders günstig, wenn die Identifikation der Onboard-Unit über einen verschlüsselten Kanal an die Funkbake gesendet wird. Hiefür kann eine direkte (point-to-point) verschlüsselte Kommunikation zwischen Onboard-Unit und anfragender Funkbake errichtet werden. Der verschlüsselte Kommunikationskanal kann beispielsweise Teil des Protokolls auf der Funkschnittstelle zwischen Onboard-Unit und Funkbake sein, z.B. Teil des ITS-G5- oder WAVE-Standards, könnte alternativ aber auch gesondert über ein 3G-, 4G- oder 5G-Mobilfunknetz errichtet werden.

In einer bevorzugten Anwendung des Identifikationsverfahrens der Erfindung wird die in der Funkbake empfangene Identifikation zusammen mit einem Zeitstempel in einem Speicher aufgezeichnet, um die Ortsnutzung zu protokollieren, z.B. für Überwachungszwecke.

In einer alternativen Anwendung des Verfahrens der Erfindung wird die in der Funkbake empfangene Identifikation mit zumindest einer vorgespeicherten berechtigten Identifikation verglichen, um die Ortsnutzung zu autorisieren, beispielsweise um Schranken zu öffnen, eine Radsperre abzusenken, ein Enforcement-System zu deaktivieren usw.

In einer weiteren Anwendung des Identifizierungsverfahrens der Erfindung wird die in der Funkbake empfangene Identifikation zum Aufsuchen und Belasten eines der Identifikation zugeordneten Mautkontos verwendet, um die Ortsnutzung zu vermauten, beispielsweise zur Erhebung von Orts- und/oder Zeitmaut, Parkgebühren, Straßenbenutzungsgebühren, Citymaut od.dgl.

In allen drei Varianten kann bevorzugt vorgesehen werden, dass die Funkbake nach Protokollierung, Autorisierung oder Vermautung der Ortsnutzung eine für die Funkbake eindeutige Bakenkennung an die Onboard-Unit sendet, welche diese speichert und bei zumindest einem nächsten Aussenden ihrer Statusmeldung(en) oder Senden ihrer Identifikation mitsendet, und dass die Funkbake eine von einer Onboard-Unit empfangene Statusmeldung oder Identifikation ignoriert, wenn die dazu mitempfangene Bakenkennung gleich ihrer eigenen Bakenkennung ist. Dadurch können versehentliche Doppel-Protokollierungen, -Autorisierungen oder- Vermautungen ein und derselben Onboard-Unit im Funkabdeckungsbereich einer Funkbake verhindert werden.

Gemäß einem weiteren bevorzugten Merkmal der Erfindung können mehr als zwei Statusmeldungen empfangen und einander zugeordnet und aus den darin angegebenen Relativabständen eine Bewegungstendenz der Onboard-Unit berechnet werden, welche zur Detektion der Ortsnutzung mit dem vorgegebenen Ort verglichen wird. Dadurch können die Detektionssicherheit erhöht und beispielsweise "Messausreißer" besser unterdrückt werden.

Besonders günstig ist es, wenn die Funkkennung nach jeweils etwa 5 bis 1000, bevorzugt 20 bis 100, Statusmeldungen gewechselt wird. Je häufiger die Funkkennung wechselt, desto größer ist der Datenschutz hinsichtlich Nachverfolgbarkeit einer bestimmten Onboard-Unit; je seltener die Funkkennung wechselt, desto geringer ist die Gefahr, dass um den zu detektierenden Ort die Funkkennung wechselt, was die Detektion erschweren würde. Die genannten Werte stellen einen guten Kompromiss zwischen diesen beiden gegensätzlichen Anforderungen dar.

Alternativ kann das Wechselintervall der Funkkennung der Onboard-Unit auch so eingestellt werden, dass die Funkkennung frühestens nach Ablauf einer vorgegebenen Zeitspanne gewechselt wird. Die vorgegebene Zeitspanne kann auf Grundlage der Größe eines üblichen Funkabdeckungsbereichs einer Funkbake und einer durchschnittlichen Geschwindigkeit von Onboard-Units so bemessen werden, dass bei der Passage einer Onboard-Unit an einer Funkbake mit hoher Sicherheit kein Funkkennungswechsel auftritt.

Eine weitere bevorzugte Ausführungsform der Erfindung besteht darin, dass die Funkkennung nicht gewechselt wird, solange sich die Onboard-Unit im Funkabdeckungsbereich ein- und derselben Funkbake befindet. Die Onboard-Unit kann dazu beispielsweise den Funkabdeckungsbereich einer Funkbake selbst ausmessen, wenn die Funkbake periodisch Bakenkennungen aussendet, oder aufgrund vorgespeicherter Listen bzw. Karten von Funkabdeckungsbereichen bekannter Funkbaken ermitteln, oder von einer Funkbake im Rahmen einer ihrer Aussendungen oder ihrer Identifikationsanfrage mitgeteilt bekommen.

Die Statusmeldungen können ferner auch die aktuelle Position und/oder einen aktuellen Bewegungsvektor der Onboard-Unit enthalten, welche/r beim Detektieren der Ortsnutzung mitverwendet wird/werden, um die Detektionssicherheit weiter zu erhöhen.

Gemäß einem weiteren bevorzugten Merkmal der Erfindung kann die aktuelle Position der Onboard-Unit mittels Satellitennavigation bestimmt und durch Bezugnahme auf eine mittels Satellitennavigation bestimmte Referenzposition der Funkbake verbessert werden, in der Art von "differential GPS" (dGPS), wobei die Funkbake den Referenzempfänger zur Verbesserung der satellitennavigationsbestimmten Positionen der Onboard-Units bildet.

Alternativ kann die aktuelle Position der Onboard-Unit mittels Satellitennavigation bestimmt und durch Bezugnahme auf mindestens eine weitere mittels Satellitennavigation bestimmte Position einer benachbarten Onboard-Unit verbessert werden. Diese Ausführungsform beruht auf der Annahme, dass die im Funkabdeckungsbereich einer Funkbake befindlichen Onboard-Units aufgrund ihrer Nähe jeweils denselben Satellitennavigationsfehlern unterliegen und daher Nachbar-OBUs als Vergleichsempfänger in der Art von dGPS herangezogen werden können.

Grundsätzlich könnte eine Funkbake zur Detektion von Ortsnutzungen in ihrer engeren oder weiteren Nachbarschaft oder sogar in entfernten Gebieten außerhalb ihres Funkabdeckungsbereichs herangezogen werden; bevorzugt enthält der Funkabdeckungsbereich der Funkbake jedoch den vorgegebenen Ort, sodass jede Funkbake für Ortsnutzungen in ihrer unmittelbaren Umgebung zuständig ist und dadurch zeit- und ortsnahe Messdaten von Onboard-Units erhält.

In einem zweiten Aspekt schafft die Erfindung eine Funkbake zur Identifizierung eines einen vorgegebenen Ort nutzenden Fahrzeugs, das eine Onboard-Unit mitführt, die wiederholt Statusmeldungen über Funk aussendet, welche jeweils einen aktuellen Relativabstand der Onboard-Unit zu dem angegebenen Ort und eine nach jeweils einer oder mehreren Statusmeldungen wechselnde Funkkennung angeben, wobei die Funkbake dafür ausgebildet ist, mit Hilfe eines Prozessors und eines daran angeschlossenen Sendeempfängers

zumindest eine Statusmeldung zu empfangen,

eine Ortsnutzung durch Auswerten der zumindest einen Statusmeldung anhand des darin vorgegebenen Relativabstands zu detektieren,

eine Identifikationsanfrage an die durch die Funkkennungen aus der zumindest einen Statusmeldung adressierbare Onboard-Unit zu senden, und daraufhin

eine über mehrere Funkkennungswechsel gleichbleibende eindeutige Identifikation der Onboard-Unit zu empfangen.

Besonders günstig ist es, wenn die Funkbake dafür ausgebildet ist,

zumindest zwei Statusmeldungen zu empfangen und anhand der darin angegebenen Funkkennungen einander zuzuordnen, und

die Ortsnutzung des Fahrzeugs durch Auswerten der einander zugeordneten Statusmeldungen anhand der darin angegebenen Relativabstände zu detektieren.

Bevorzugt enthält die Funkbake ein kryptographisches Absenderzertifikat und ist dafür ausgebildet, dieses mit der Identifikationsanfrage mitzusenden.

In einem dritten Aspekt schafft die Erfindung eine Onboard-Unit, mit einem Prozessor, einem Satellitennavigationsempfänger zur Positionsbestimmung und einem Sendeempfänger zur Funkkommunikation, wobei die Onboard-Unit dafür ausgebildet ist, mit Hilfe des Sendeempfängers wiederholt Statusmeldungen über Funk auszusenden, welche jeweils eine nach mehreren Statusmeldungen wechselnde Funkkennung der Onboard-Unit enthalten,

wobei die Onboard-Unit weiters dafür ausgebildet ist, in jeder Statusmeldung ihren aktuellen, mittels des Satellitennaviagationsempfangs bestimmten Relativabstand zu einem vorgegebenen Ort anzugeben,

eine an ihre aktuelle Funkkennung adressierte und ein kryptographisches Absenderzertifikat enthaltende Identifikationsanfrage von einer Funkbake zu empfangen,

das Absenderzertifikat zu validieren und, wenn es valid ist,

eine über mehrere Funkkennungswechsel gleichbleibende eindeutige Identifikation der Onboard-Unit an die Funkbake zu senden.

Bevorzugt sind die Statusmeldungen der Onboard-Unit modifizierte CAM-Nachrichten nach dem ITS-G5-Standard oder modifizierte BSM-Nachrichten nach dem WAVE-Standard.

Hinsichtlich weiterer Merkmale und Vorteile der Funkbake und Onboard-Unit der Erfindung wird auf die obigen Ausführungen zum Verfahren und die nachstehende Beschreibung bevorzugter Ausführungsbeispiele verwiesen, welche unter Bezugnahme auf die begleitenden Zeichnungen gegeben wird, in denen zeigt:

Fig. 1 im Rahmen des Verfahrens der Erfindung wirkende Komponenten einschließlich der Funkbake und mehrerer Onboard-Units der Erfindung in einem schematischen Überblick;
Fig. 2 ein Blockschaltbild und gleichzeitig Signalflussdiagramm des Verfahrens der Erfindung; und
Fig. 3 ein Sequenzdiagramm des Nachrichtenaustauschs auf der Funkschnittstelle zwischen Funkbake und Onboard-Unit.

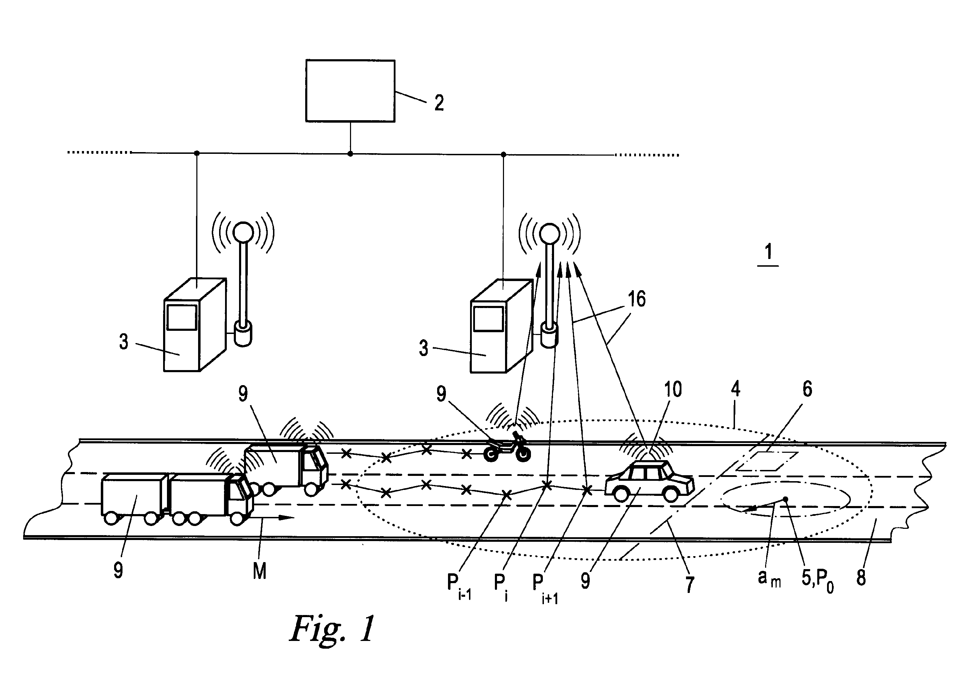

Fig. 1 zeigt als beispielhafte Anwendung des Identifizierungsverfahrens der Erfindung ein Straßenmautsystem 1 mit einer Zentrale 2 und einer Vielzahl damit in Verbindung stehender, geographisch verteilter, straßenseitig aufgestellter Funkbaken (roadside entities, RSE) 3. Die Funkbaken 3 haben jeweils einen begrenzten Funkabdeckungsbereich 4, z.B. einen Funkradius von 200 m, innerhalb dessen vorgegebene Orte wie Punkte 5 ("virtuelle Mautstellen"), Bereiche 6 (z.B. Parkplätze), Grenzen 7 (z.B. virtuelle "gantries", Innenstadtgrenzen usw.) oder Straßensegmente 8 definiert sind, wobei die Orte 5 - 8 auch ganz oder teilweise außerhalb des Funkabdeckungsbereichs 4 liegen können. Bevorzugt liegen sie (zumindest teilweise) innerhalb des Funkabdeckungsbereichs 5, was die Zuordnung einer Funkbake 3 zu den Orten 5 - 8, für welche sie zuständig ist, vereinfacht.

Die Funkbaken 3 detektieren Ortsnutzungen von Fahrzeugen 9, die ihren Funkabdeckungsbereich 4 passieren, d.h. ob - und optional wie lange - sie einen der Orte 5 - 8 nutzen, und identifizieren solche ortsnutzenden Fahrzeuge 9. Fahrzeuge 9, die keinen der Orte 5 - 8 nutzen, sollen nicht identifiziert werden, d.h. anonym bleiben.

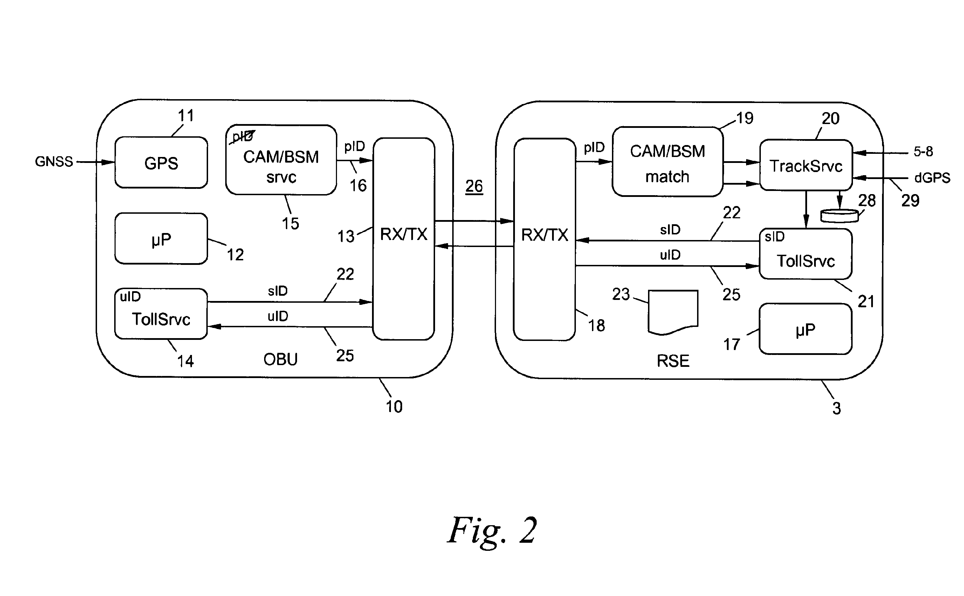

Zu den genannten Zwecken werden alle Fahrzeuge 9 mit Onboard-Units (OBUs) 10 ausgestattet, deren Aufbau anhand von Fig. 2 näher erläutert wird.

Gemäß Fig. 2 weist jede OBU 10 einen Satellitennavigationsempfänger 11 zur fortlaufend wiederholten Bestimmung ihrer jeweils aktuellen Position ("position fix") $P_1$, $P_2$, ..., allgemein $P_i$, in einem globalen Satellitennavigationssystem (global navigation satellite system, GNSS) wie GPS, GLONASS, Galileo, od.dgl. auf. Ferner ist die OBU 10 mit einem Prozessor 12 und einem Sendeempfänger 13 ausgestattet, wobei einige der Datenverbindungen zwischen Satellitennavigationsempfänger 11, Prozessor 12 und Sendeempfänger 13 zwecks Übersichtlichkeit nicht dargestellt sind.

Mit 14 ist schematisch eine vom Prozessor 12 ausführbare Dienstapplikation bezeichnet, beispielsweise eine Mautapplikation, die in der später noch erörterten Weise mit den Funkbaken 3 und der Zentrale 2 des Straßenmautsystems 1 zusammenwirken kann und zu diesem Zweck über eine im Straßenmautsystem 1 eindeutige OBU-Kennung uID ("unique ID") verfügt. Die OBU-Identifikation uID kann beispielsweise eine eindeutige Fertigungskennung der OBU 10, der Name ihres Besitzers, der Name des Fahrzeughalters des Fahrzeugs, auf dem die OBU 10 montiert ist, eine Konto- oder Kreditkartenkennung des Fahrzeughalters od.dgl. sein. Die OBU-Identifikation uID ist im Straßenmautsystem 1 der Zentrale 2 und/oder den Funkbaken 3 bekannt und kann dort zur Identifikation des Fahrzeugs 9, welches die OBU mitführt, verwendet werden.

Mit 15 ist eine vom Prozessor 12 abgearbeitete Sicherheitsapplikation bezeichnet, mittels welcher die OBU 10 fortlaufend wiederholt, bevorzugt periodisch etwa alle 100 ms, über ihren Sendeempfänger 13 eine Statusmeldung 16 aussendet. Die Statusmeldung 16 ist zum Empfang durch OBUs 10 benachbarter Fahrzeuge 9 und/oder straßenseitige Infrastruktur wie die Funkbaken 3 gedacht und erfordert weder eine Empfangsbestätigung noch einen tatsächlichen Empfang; die Applikation 15 sendet Statusmeldungen 16 über den Sendeempfänger 13 ohne Rücksicht darauf, ob sie von einem Empfänger empfangen werden oder nicht, optional kann sie aber auch zusätzlich von Funkbaken 3 oder anderen OBUs 10 dazu aufgefordert werden.

Die Statusmeldungen 16 können jeweils die letzte der vom Satellitennavigationsempfänger 11 bestimmte Position $P_i$ der OBU 10 und optional auch noch weitere Daten, beispielsweise Geschwindigkeit und Bewegungsrichtung (Bewegungsvektor) M, Höhe, Messgenauigkeit usw. enthalten. Jede Statusmeldung 16 ist dabei mit einer temporären Funkkennung pID versehen, sodass Nachbar-OBUs oder Infrastruktur aufeinanderfolgende Statusmeldungen 16 anhand der temporären Funkkennung pID korrelieren, d.h. einander zuordnen können, um zumindest über kurze Zeit die Bewegungsbahn (Trajektorie) einer OBU 10 anhand der Positionen $P_i$ aus aufeinanderfolgenden Statusmeldungen 16 ermitteln zu können.

Onboard-Units 10 mit Sicherheitsapplikationen 15 zur Versendung derartiger Statusmeldungen 16 sind beispielsweise in den Standards ITS-G5 und WAVE (IEEE 802.11p) definiert. Statusmeldungen 16 dieser Art werden im ITS-G5-Standard als "common awareness messages" (CAM) und im WAVE-Standard (insbesondere SAE J2735) als "basic safety messages" (BSM) bezeichnet. Die temporäre Funkkennung pID einer Statusmeldung 16 kann dabei beispielsweise eine temporäre IP6-Adresse, eine MAC-Adresse oder Pseudo-MAC-Adresse der OBU 10 sein, eine genaue oder bevorzugt verallgemeinerte Geo-Position (Ortskoordinaten) der OBU 10, od.dgl. Im einfachsten Fall kann daher die temporäre Funkkennung pID sogar gleich der Position $P_i$ der OBU 10 sein.

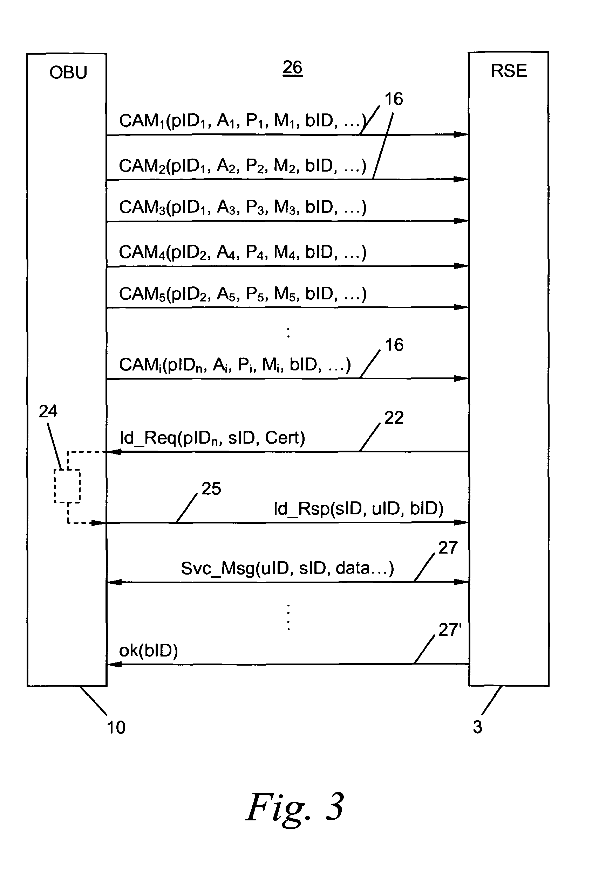

Die Funkkennung pID ist im Straßenmautsystem 1 bzw. der Zentrale 2 und den Funkbaken 3 nicht bekannt und hat dort keine Bedeutung; sie kann von einer OBU 10 beispielsweise auch zufällig gewählt werden. Die Funkkennung pID ist auch in dem Sinne "temporär", dass sie nach einer bestimmten Anzahl von Statusmeldungen 16 wechselt, um eine Nachverfolgung einer bestimmten OBU 10 über einen längeren Zeitraum zu unterbinden. Beispielsweise wird die Funkkennung pID nach jeweils jeder fünften bis tausendsten, bevorzugt jeder zwanzigsten bis hundertsten, Statusmeldung 16 gewechselt. Dieses Verfahren ist in dem Sequenzdiagramm von Fig. 3 ausführlicher gezeigt.

Alternativ kann die Funkkennung pID nach einer vorgegebenen Zeitspanne gewechselt werden, oder der Wechsel kann selektiv unterbleiben, d.h. von der Onboard-Unit 10 unterdrückt werden, solange sie sich im Funkabdeckungsbereich 4 ein und derselben Funkbake 3 befindet. Die Onboard-Unit 10 kann dazu Informationen über die Position einer Funkbake und/oder die Größe des Funkabdeckungsbereichs 4 vorgespeichert haben, z.B. in Form von Listen oder Karten, oder auch von einer Funkbake 3 mitgeteilt bekommen, sei es in Form periodischer Rundstrahlsendungen einer Funkbake 3 oder im Zuge der später noch erörterten Nachrichten 22, 27 und 27'.

Für die Zwecke des hier vorgestellten Verfahrens werden die Statusmeldungen 16 insoweit gegenüber herkömmlichen CAM- bzw. BSM-Nachrichten modifiziert, als dass sie - anstelle oder zusätzlich zu der aktuellen Position $P_i$ der OBU 10 - jeweils den aktuellen Relativabstand $A_i$ der OBU 10 zu einem vorgegebenen Ort 5 - 8 enthalten. Dazu ist es erforderlich, dass die OBU 10 eine Information über die Ortskoordinaten (Geo-Position) $P_0$ des vorgegebenen Orts 5 - 8 hat, beispielsweise des Punkts 5 oder des Mittelpunkts oder eines Bezugspunkts des Bereiches 6, der Grenze 7, des Straßensegments 8 usw.

Die Positionsinformation $P_0$ des vorgegebenen Orts 5 - 8 kann beispielsweise in der OBU 10 vorgespeichert sein, z.B. als Liste, und zwar sowohl bei der Fertigung oder Auslieferung der OBU 10 als auch "on the fly" eingespeichert, beispielsweise von einer der Funkbaken 3 empfangen oder von der Zentrale 2 über das Netz von Funkbaken 3 oder ein anderes Funknetz, z.B. ein Mobilfunknetz, an die OBUs 10 distribuiert. Wenn es mehrere vorgegebene Orte 5 - 8 gibt, sendet die OBU 10 beispielsweise in den Statusnachrichten 16 jeweils den Relativabstand $A_i$ zum nächstgelegenen Ort 5 - 8, sofern sie nicht von einer Funkbake 3 oder auf andere Weise einen Auftrag erhält, den Relativabstand $A_i$ zu einem anderen als dem nächstgelegenen Ort 5 - 8 zu berechnen.

Die Berechnung des Relativabstands $A_i$ zwischen der aktuellen Position $P_i$ der OBU 10 und der Position $P_0$ des vorgegebenen Orts 5 - 8 ist eine klassische Berechnung der Länge des Vektors von $P_0$ zu Pi gemäß der Gleichung

$$A_i = \sqrt{(X_i - X_0)^2 + (Y_i - Y_0)^2 + (Z_i - Z_0)^2} \; , \qquad (1)$$

wobei $(X_i/Y_i/Z_i)$ die Koordinaten der aktuellen Position $P_i$ der OBU 10 und $(X_0/Y_0/Z_0)$ die Koordinaten der Position $P_0$ des vorgegebenen Orts 5 - 8 sind. Selbstverständlich kann die Berechnung auch ausschließlich in der zweidimensionalen Ebene X/Y durchgeführt werden, d.h. die Z-Koordinaten können unberücksichtigt gelassen werden.

Gemäß Fig. 3 sendet die OBU 10 wiederholt Statusnachrichten 16, hier bezeichnet mit $CAM_1$, $CAM_2$, $CAM_3$ ..., allgemein $CAM_i$. Die Funkkennung $pID_n$ wechselt im gezeigten Beispiel nach den ersten drei Statusmeldungen 16 bzw. $CAM_1$, $CAM_2$, $CAM_3$ von $pID_1$ auf $pID_2$, usw. usf. Bei der i-ten Statusmeldung $CAM_i$ wird die n-te Funkkennung $pID_n$ verwendet (n << i).

Mit statistisch hoher Wahrscheinlichkeit können daher zwei aufeinanderfolgende Statusmeldungen 16 anhand ihrer gleichen Funkkennung $pID_i$ einander zugeordnet werden; lediglich beim Funkkennungswechsel $pID_n$ auf $pID_{n+1}$ ist eine direkte Korrelation der Statusmeldung 16 vor und nach dem Funkkennungswechsel nicht möglich. In diesem Fall kann eine Korrelation der Statusmeldungen 16 auch durch eine Mitverfolgung der Bewegungshistorie ("tracking") der Onboard-Unit 10 erfolgen, beispielsweise durch Auswertung deren Geschwindigkeit, Richtungsvektor usw., sei es, dass diese in den Statusmeldungen 16 von der OBU 10 selbst mitgeteilt werden oder von der Funkbake 3 gemessen werden. Auch könnten Eigenschaften des Fahrzeugs 9, das die OBU 10 mitführt, wie Fahrzeugbreite, -länge, -höhe usw., in der OBU 10 gespeichert und in ihren Statusmeldungen 16 mitgeteilt werden oder von der Funkbake 3 gemessen werden, um die Korrelationssicherheit zu erhöhen.

Gemäß den Fig. 1 - 3 ist damit eine Funkbake 3, welche die Statusmeldungen 16 aller in ihrem Funkabdeckungsbereich 4 passierenden OBUs 10 empfängt, in der Lage, die von einer bestimmten OBU 10 ausgehenden Statusmeldungen 16 anhand der Funkkennungen pID einander zuzuordnen und damit die Bewegungstendenz der OBU 10 aus den Relativabständen $A_i$, optional auch die gesamte Bewegungsbahn der OBU 10 aus den Positionen $P_i$, wenn diese mitübermittelt werden, mitzuverfolgen. Zu diesem Zweck verfügt die Funkbake 3 gemäß Fig. 2 über einen Prozessor 17, einen Sendeempfänger 18 und einen vom Prozessor 17 abgearbeiteten Zuordnungsprozess 19, welcher den Strom von einlangenden Statusmeldungen 16 hinsichtlich korrelierender Funkkennungen pID filtert und die Relativabstände $A_i$ aus den einander zugeordneten Statusmeldungen 16 einem vom Prozessor 18 abgearbeiteten Tracking-Prozess 20 zuführt. Wenn die Funkkennungen pID direkt den Positionen $P_i$ oder daraus verallgemeinerten Geopositionen entsprechen, kann der Zuordnungsprozess 19 die gegenseitige Zuordnung der Statusmeldungen 16 auch anhand einer Bewe-

EP 2 660 794 B1

gungshistorie ("tracking") der OBU 10 durchführen.

Der Tracking-Prozess 20 vergleicht die so erhaltenen Relativabstände $A_i$ mit einem Maximalabstand $a_m$ von einem vorgegebenen Ort 5 - 8, um eine Ortsnutzung zu detektieren. Auch kann die Bewegungstendenz der OBU 10 auf fortschreitend zunehmend oder fortschreitend abnehmende Relativabstände $A_i$ überwacht werden, um Messausreißer zu detektieren bzw. zu unterdrücken und das Überschreiten der Abstandsgrenze $a_m$ sicher zu detektieren.

Zusätzlich können auch die aktuellen Positionen $P_i$, wenn diese mitübersandt werden, ausgewertet werden, um die Detektionssicherheit weiter zu erhöhen. Da die Abstandsberechnung gemäß Gleichung 1 in der OBU 10 erfolgt, kann der Tracking-Prozess 20 in der Funkbake 3 sehr einfach gehalten werden und sich beispielsweise auf den einfachen Vergleich "$A_i < a_m$ ?" reduzieren. Optional können aber auch mehrere in aufeinanderfolgenden Statusmeldungen 16 gesandte Relativabstände $A_i$ gemeinsam ausgewertet werden, z.B. ihr Mittelwert gebildet und mit dem Maximalabstand $a_m$ verglichen werden.

Ist der vorgegebene Ort $P_0$ ein Punkt 5, kann die anhand der Relativabstände $A_i$ detektierte Ortsnutzung zusätzlich validiert werden, wenn eine vorgegebene Anzahl oder ein Mittelwert von Positionen $P_i$ einen Maximalabstand $a_m$ vom Punkt 5 unterschreitet. Wenn der Ort ein Bereich 6 ist, kann die Detektion der Ortsnutzung zusätzlich validiert werden, wenn eine vorgegebene Anzahl oder ein Mittelwert von Positionen $P_i$ in den Bereich 6 fällt. Wenn der Ort ein Straßensegment 8 ist, kann die Detektion der Ortsnutzung zusätzlich validiert werden, wenn z.B. die Positionen $P_i$ das vollständige Befahren des Straßensegmentes 8 anzeigen, von dessen Anfang bis zu dessen Ende, oder das Befahren einer vorgegebenen Abfolge von mehreren aufeinanderfolgenden Straßensegmenten 8, od.dgl. Wenn der Ort eine Grenze 7 ist (welche im übrigen auch zur Begrenzung des Umfanges um den Punkt 5, des Bereichs 6 oder des Straßensegments 8 herangezogen werden kann), dann kann die Detektion der Ortsnutzung zusätzlich dazu detektieren eines Überschreitens der Grenze validiert werden.

In einer vereinfachten Ausführungsform kann die Funkbake 3 bereits aus einer einzigen Statusmeldung 16 eine Ortsnutzung detektieren, sodass der Zuordnungsprozess 19 entfallen kann. In diesem Fall kann beispielsweise eine Ortsnutzung detektiert werden, wenn ein einziger Relativabstand $A_i$ den Maximalabstand $a_m$ um den Punkt 5 unterschreitet. Wenn die Statusmeldung 16 zusätzliche Daten wie Geschwindigkeit und Bewegungsrichtung, insbesondere einen Bewegungsvektor M, der OBU 10 enthält, kann eine Ortsnutzung auch detektiert werden, wenn eine Extrapolation der Bewegung der OBU 10 in die Vergangenheit oder Zukunft ergibt, dass sie knapp zuvor, soeben oder in Kürze einen Ort benutzt hat, benutzt oder benutzen wird, z.B. den Maximalabstand $a_m$ unter- bzw. die Grenze 7 überschritten hat oder überschreiten wird.

Sobald der Tracking-Prozess 20 eine Ortsnutzung detektiert, startet er eine für diese Ortsnutzung zuständige Dienstapplikation 21, welche vom Prozessor 17 abgearbeitet wird. Die Applikation 21 kann z.B. ein Protokollierungs-, Kontroll- oder Autorisierungsdienst sein, um die detektierte Ortsnutzung - für die OBU 10 identifiziert - aufzuzeichnen, zu überwachen oder weitere Schritte wie das Öffnen einer Zugangssperre zu autorisieren od.dgl. Im vorliegenden Beispiel ist die Dienstapplikation 21 ein Vermautungsdienst mit der Dienstidentifikation sID, welcher die Ortsnutzung für die OBU 10 vermauten (vergebühren) kann.

Die Dienstapplikation 21 sendet nun eine Identifikationsanfrage Id_Req 22, optional zusammen mit ihrer Dienstidentifikation sID, über den Sendeempfänger 18 an die OBU 10 mit jener Funkkennung pID, die in den vom Zuordnungsprozess 19 zugeordneten Statusmeldungen 16 angegeben war, siehe auch Fig. 3. Die Identifikationsanfrage 22 enthält bevorzugt ein kryptographisches Absenderzertifikat "Cert" 23 der Funkbake 3, um diese gegenüber der Onboard-Unit 10 zu authentifizieren.

Die durch die Funkkennung pID adressierte OBU 10 empfängt die Identifikationsanfrage 22 und leitet sie an den entsprechenden Prozess weiter, hier die Mautapplikation 14. Wenn die Identifikationsanfrage 22 ein Absenderzertifikat 23 enthält, kann die OBU 10 in einem optionalen Schritt 24 (Fig. 3) die Echtheit des Zertifikats 23 überprüfen; wenn dieses echt bzw. gültig (valid) ist, führt sie die weiteren Schritte aus; andernfalls wird die Identifikationsanfrage 22 ignoriert.

Die OBU 10 beantwortet die Identifikationsanfrage 22 durch Freigabe (Offenbarung) ihrer systemweit eindeutigen, d.h. auch über mehrere Wechsel der Funkkennung pID gleichbleibend eindeutigen Identifikation uID, siehe Deklarationsnachricht Id_Rsp 25, welche sie über den Sendeempfänger 13 an den Sendeempfänger 18 der Funkbake 3 zurücksendet. Die Deklarationsnachricht 25 kann die Dienstkennung sID der abfragenden Dienstapplikation 21 der Funkbake 3 enthalten, sodass die Deklarationsnachricht dort der richtigen Dienstapplikation 21 zugeführt werden kann.

Die OBU 10 ist ab nun mit ihrer eindeutigen Identifikation uID gegenüber der Dienstapplikation 21 identifiziert, und letztere mit ihrer Dienstkennung sID und ihrem Zertifikat 23 gegenüber der OBU 10 bzw. der Mautapplikation 14. Über die Funkschnittstelle 26 zwischen Sendeempfänger 13 der OBU 10 und Sendeempfänger 18 der Funkbake 3 können daher nun weitere dienstspezifische Nachrichten Svc_Msg 27 ausgetauscht werden. Die Nachrichten 27 können beispielsweise Datenpakete eines herkömmlichen Mautprotokolls zur Vermautung der Ortsnutzung sein. Die OBU-Identifikation uID kann dabei beispielsweise ein Mautkonto in der Funkbake 3 oder der Zentrale 2 referenzieren, welches mit Mautgebühren für die Ortsnutzung belastet wird. Alternativ könnte die Identifikation uID mit (zumindest) einer in der Funkbake 3 oder der Zentrale 2 vorgespeicherten berechtigten (Referenz-) Identifikation $uID_{ref}$ verglichen werden, wobei

7

der Gleichheitsfall die Identifikation uID z.B. für einen Ortszutritt oder für den Erhalt einer Dienstleistung autorisiert.

Sobald die Funkbake 3 und die OBU 10 gegenseitig authentifiziert sind, insbesondere durch Auswertung des Absenderzertifikats 23 der Funkbake 3, können alle anschließenden Kommunikationen wie die Deklarationsnachricht 25 und die anschließenden Dienstnachrichten 27 verschlüsselt über die Funkschnittstelle 26 übertragen werden, z.B. als verschlüsselte point-to-point-Kommunikation. Ein solcher verschlüsselter Übertragungskanal könnte alternativ statt über die Funkschnittstelle 26 auch über ein (nicht dargestelltes) Mobiltelefonnetz errichtet werden, beispielsweise auch direkt zur Zentrale 2.

In einer vereinfachten Ausführungsform, in welcher die Funkbake 3 keine Vermautungsfunktion ausführt, sondern lediglich zur Identifikation der Fahrzeuge 9 bzw. OBUs 10 dient, können die ermittelten Identifikationen uID der Onboard-Units 10 - bevorzugt jeweils zusammen mit einem aktuellen Zeitstempel t - auch einfach nur für Protokollierungszwecke in einem Speicher 28 der Funkbake 3 oder Zentrale 2 aufgezeichnet werden.

In einem optionalen Schritt 27' kann die Funkbake 3 nach einer erfolgreichen Protokollierung, Autorisierung oder Vermautung einer Ortsnutzung eine Bestätigungsnachricht "ok" an die OBU 10 senden, in welcher sie (gegebenenfalls auch nochmals) eine eindeutige Bakenkennung bID sendet. Die OBU 10 kann Bakenkennungen bID, welche sie von Funkbaken 3 erhält, speichern und zumindest jeweils die zuletzt empfangene Bakenkennung bID in einer (oder mehreren) ihrer Statusmeldungen 16 und/oder bei der Offenbarung ihrer Identifikation uID im Schritt 25 an eine Funkbake 3 senden. Die Funkbake 3 kann dadurch solche Statusmeldungen 16 und/oder Identifikations-Sendungen 25 ignorieren bzw. ausblenden, mit denen sie eine Bakenkennung bID mitempfängt, die gleich ihrer eigenen Bakenkennung bID ist, um eine Doppelverarbeitung ein und derselben passierenden OBU 10 zu vermeiden.

Bei der Ermittlung der aktuellen Positionen Pi und der Relativabstände $A_i$ können die Positionen $P_i$ einer OBU 10 durch Vergleich mit bekannten Referenzpositionen - oder zumindest denselben Messfehlern unterliegenden Drittpositionen - verbessert werden, wie auf dem Gebiet von Differential-GPS (dGPS) bekannt. So kann beispielsweise die Funkbake 3 einen eigenen Satellitennavigationsempfänger (nicht gezeigt) haben, der Referenz-Positionen $P_{ref,i}$ der Funkbake 3 zu etwa denselben Zeitpunkten, zu denen die Positionen $P_i$ erstellt werden, misst und der OBU 10 zur Verfügung stellt, beispielsweise übersendet. In Kenntnis der vorbekannten Position einer ortsfesten Funkbake 3 können dann die satellitennavigationsbestimmten Positionen $P_i$ auf die - etwa gleichartigen Messfehlern unterliegenden - Referenzpositionen $P_{ref,i}$ bezogen und damit Messfehler kompensiert werden, siehe Pfad 29 in Fig. 2. In derselben Weise könnten auch die jeweils zu ähnlichen Zeitpunkten von Nachbar-OBUs 10 ermittelten Positionen $P_i$ für die Messfehlerbereinigung der von einer interessierenden OBU 10 erzeugten Positionen $P_i$ herangezogen werden.

Die Erfindung ist nicht auf die dargestellten Ausführungsformen beschränkt, sondern umfasst alle Varianten und Modifikationen, die in den Rahmen der angeschlossenen Ansprüche fallen.

## Patentansprüche

1. Verfahren zur Identifizierung eines einen vorgegebenen Ort (5 - 8) nutzenden Fahrzeugs (9), umfassend:

   auf dem Fahrzeug (9) Mitführen einer Onboard-Unit (10), die wiederholt Statusmeldungen (16) über Funk aussendet, welche jeweils einen aktuellen Relativabstand ($A_i$) der Onboard-Unit (10) zu dem vorgegebenen Ort (5 - 8) und eine nach jeweils einer oder mehreren Statusmeldungen (16) wechselnde Funkkennung (pID) angeben,
   Empfangen zumindest einer Statusmeldung (16) in einer Funkbake (3),
   Detektieren einer Ortsnutzung des Fahrzeugs (9) durch Auswerten der zumindest einen Statusmeldung (16) anhand des darin angegebenen Relativabstands ($A_i$),
   Senden einer Identifikationsanfrage (22) von der Funkbake (3) an die durch die Funkkennung (pID) aus der zumindest einen Statusmeldung (16) adressierte Onboard-Unit (10),
   Empfangen und Berechtigungsprüfen (24) der Identifikationsanfrage (22) in der Onboard-Unit (10) und, wenn die Anfrage (22) berechtigt ist, Senden (25) einer über mehrere Funkkennungswechsel gleichbleibenden eindeutigen Identifikation (uID) der Onboard-Unit (10) an die Funkbake (3).

2. Verfahren nach Anspruch 1, **dadurch gekennzeichnet, dass** eine Information ($P_0$) über den vorgegebenen Ort (5 - 8) von der Funkbake (3) an die Onboard-Unit (10) gesandt wird und diese daraus und aus ihrer aktuellen Position ($P_i$) den Relativabstand ($A_i$) berechnet.

3. Verfahren nach Anspruch 1, **dadurch gekennzeichnet, dass** eine Information ($P_0$) über den vorgegebenen Ort (5 - 8) in der Onboard-Unit (10) gespeichert wird und diese daraus und aus ihrer aktuellen Position ($P_i$) den Relativabstand ($A_i$) berechnet.

4. Verfahren nach einem der Ansprüche 1 bis 3, **dadurch gekennzeichnet, dass** zumindest zwei Statusmeldungen (16) in einer Funkbake (3) empfangen und anhand der darin angegebenen Funkkennungen (pID) einander zugeordnet werden, und
dass die Ortsnutzung des Fahrzeugs (9) durch Auswerten der einander zugeordneten Statusmeldungen (16) anhand der darin angegebenen Relativabstände ($A_i$) detektiert wird.

5. Verfahren nach einem der Ansprüche 1 bis 4, **dadurch gekennzeichnet, dass** das Berechtigungsprüfen (24) durch Überprüfen eines von der Funkbake (3) mit der Identifikationsanfrage (22) mitgesandten kryptographischen Absenderzertifikats (23) der Funkbake (3) erfolgt.

6. Verfahren nach einem der Ansprüche 1 bis 5, **dadurch gekennzeichnet, dass** die Identifikation (uID) der Onboard-Unit (10) über einen verschlüsselten Kanal (26) an die Funkbake (3) gesendet wird.

7. Verfahren nach einem der Ansprüche 1 bis 6, **dadurch gekennzeichnet, dass** die in der Funkbake (3) empfangene Identifikation (uID) zusammen mit einem Zeitstempel (t) in einem Speicher (28) aufgezeichnet wird, um die Ortsnutzung zu protokollieren, oder mit zumindest einer vorgespeicherten berechtigten Identifikation ($uID_{ref}$) verglichen wird, um die Ortsnutzung zu autorisieren, oder zum Aufsuchen und Belasten eines der Identifikation (uID) zugeordneten Mautkontos verwendet wird, um die Ortsnutzung zu vermauten.

8. Verfahren nach Anspruch 7, **dadurch gekennzeichnet,**
**dass** die Funkbake (3) nach Protokollierung, Autorisierung oder Vermautung der Ortsnutzung eine für die Funkbake eindeutige Bakenkennung (bID) an die Onboard-Unit (10) sendet (27'), welche diese speichert und bei zumindest einem nächsten Aussenden ihrer Statusmeldung(en) (16) oder Senden ihrer Identifikation (uID) mitsendet, und
**dass** die Funkbake (3) eine von einer Onboard-Unit (10) empfangene Statusmeldung (16) oder Identifikation (uID) ignoriert, wenn die dazu mitempfangene Bakenkennung (bID) gleich ihrer eigenen Bakenkennung (bID) ist.

9. Verfahren nach einem der Ansprüche 1 bis 8, **dadurch gekennzeichnet, dass** die Funkkennung (pID) nach jeweils etwa 5 bis 1000, bevorzugt 20 bis 100, Statusmeldungen (16) gewechselt wird.

10. Verfahren nach einem der Ansprüche 1 bis 8, **dadurch gekennzeichnet, dass** die Funkkennung (pID) frühestens nach Ablauf einer vorgegebenen Zeitspanne gewechselt wird.

11. Verfahren nach einem der Ansprüche 1 bis 8, **dadurch gekennzeichnet, dass** die Funkkennung (pID) nicht gewechselt wird, solange sich die Onboard-Unit (10) im Funkabdeckungsbereich (4) ein und derselben Funkbake (3) befindet.

12. Verfahren nach einem der Ansprüche 1 bis 11, **dadurch gekennzeichnet, dass** jede Statusmeldung (16) auch die aktuelle Position ($P_i$) und/oder einen aktuellen Bewegungsvektor ($M_i$) der Onboard-Unit (10) angibt, welche/r beim Detektieren der Ortsnutzung mitverwendet wird/werden.

13. Verfahren nach einem der Ansprüche 1 bis 12, **dadurch gekennzeichnet, dass** die aktuelle Position ($P_i$) der Onboard-Unit (10) mittels Satellitennavigation (11) bestimmt und durch Bezugnahme auf eine mittels Satellitennavigation bestimmte Referenzposition (29) der Funkbake (3) verbessert wird.

14. Funkbake (3) zur Identifizierung eines einen vorgegebenen Ort (5 - 8) nutzenden Fahrzeugs (9), das eine Onboard-Unit (10) mitführt, die wiederholt Statusmeldungen (16) über Funk aussendet, welche jeweils einen aktuellen Relativabstand ($A_i$) der Onboard-Unit (10) zu dem vorgegebenen Ort (5 - 8) und eine nach jeweils einer oder mehreren Statusmeldungen (16) wechselnde Funkkennung (pID) angeben, **dadurch gekennzeichnet, dass** sie dafür ausgebildet ist, mit Hilfe eines Prozessors (17) und eines daran angeschlossenen Sendeempfängers (18) zumindest eine Statusmeldung (16) zu empfangen,
eine Ortsnutzung durch Auswerten (20) der zumindest einen Statusmeldung (16) anhand des darin angegebenen Relativabstands ($A_i$) zu detektieren,
eine Identifikationsanfrage (22) an die durch die Funkkennungen (pID) aus der zumindest einen Statusmeldung (16) adressierbare Onboard-Unit (10) zu senden, und daraufhin
eine über mehrere Funkkennnungswechsel gleichbleibende eindeutige Identifikation (uID) der Onboard-Unit (10) zu empfangen (25).

15. Onboard-Unit, mit einem Prozessor (12), einem Satellitennavigationsempfänger (11) zur Positionsbestimmung und einem Sendeempfänger (13) zur Funkkommunikation, wobei die Onboard-Unit (10) dafür ausgebildet ist, mit Hilfe des Sendeempfängers (13) wiederholt Statusmeldungen (16) über Funk auszusenden, welche jeweils eine nach mehreren Statusmeldungen (16) wechselnde Funkkennung (pID) der Onboard-Unit (10) enthalten, **dadurch gekennzeichnet, dass** sie weiters dafür ausgebildet ist, in jeder Statusmeldung (16) ihren aktuellen, mittels des Satellitennavigationsempfangs (11) bestimmten Relativabstand ($A_i$) zu einem vorgegebenen Ort (5 - 8) anzugeben, eine an ihre aktuelle Funkkennung (pID) adressierte und ein kryptographisches Absenderzertifikat (23) enthaltende Identifikationsanfrage (22) von einer Funkbake (3) zu empfangen,

das Absenderzertifikat (23) zu validieren (24) und, wenn es valid ist,

eine über mehrere Funkkennungswechsel gleichbleibende eindeutige Identifikation (uID) der Onboard-Unit (10) an die Funkbake (3) zu senden (25).

## Claims

1. A method for identifying a vehicle (9) using a predetermined location (5 - 8), comprising:

   carrying, on the vehicle (9), an onboard unit (10) that via radio repeatedly broadcasts status messages (16), which each indicate a current relative distance ($A_i$) of the onboard unit (10) from the predetermined location (5 - 8) and a radio identifier (pID) that changes after each or several status messages (16);

   receiving at least one status message (16) in a radio beacon (3);

   detecting a location usage of the vehicle (9) by evaluating the at least one status message (16) based on the relative distance ($A_i$) indicated therein;

   transmitting an identification request (22) from the radio beacon (3) to that onboard unit (10) which is addressed by way of the radio identifier (pID) from the at least one status message;

   receiving and conducting a legitimacy check (24) of the identification request (22) in the onboard unit (10) and, if the request (22) is legitimate, transmitting (25) a unique identification (uID) of the onboard unit (10) to the radio beacon (3), the unique identification remaining the same over several changes of radio identifier.

2. The method according to claim 1, **characterized in that** information ($P_0$) about the predetermined location (5 - 8) is transmitted from the radio beacon (3) to the onboard unit (10), which based thereon and based on the current position ($P_i$) of the onboard unit calculates the relative distance ($A_i$).

3. The method according to claim 1, **characterized in that** information ($P_0$) about the predetermined location (5 - 8) is stored in the onboard unit (10), which based thereon and based on the current position ($P_i$) of the onboard unit calculates the relative distance ($A_i$).

4. The method according to any one of claims 1 to 3, **characterized in that** at least two status messages (16) are received in a radio beacon (3) and are associated with each other based on the radio identifiers (pID) indicated therein, and

   the location usage of the vehicle (9) is detected by evaluating the mutually associated status messages (16) based on the relative distances ($A_i$) indicated therein.

5. The method according to any one of claims 1 to 4, **characterized in that** the legitimacy check (24) is done by checking a cryptographic sender certificate (23) of the radio beacon (3) that is transmitted by the radio beacon (23) along with the identification request (22).

6. The method according to any one of claims 1 to 5, **characterized in that** the identification (uID) of the onboard unit (10) is transmitted to the radio beacon (3) via an encrypted channel (26).

7. The method according to any one of claims 1 to 6, **characterized in that** the identification (uID) received in the radio beacon (3) is recorded together with a time stamp (t) in a memory (28) so as to log the location usage, or is compared to at least one previously stored legitimate identification ($uID_{ref}$) so as to authorize the location usage, or is used to search for and debit a toll account associated with the identification (uID) so as to toll the location usage.

8. The method according to claim 7, **characterized in that** the radio beacon (3) transmits (27') a beacon identifier (bID) that is unique to the radio beacon to the onboard unit (10) after logging, authorization or tolling of the location usage, the onboard unit storing this identifier and transmitting the same at least along with a subsequent broadcast of the status message(s) (16) thereof or transmission of the identification (uID) thereof, and

the radio beacon (3) ignores a status message (16) or identification (uID) received from an onboard unit (10) if the beacon identifier (bID) received along therewith is identical to its own beacon identifier (bID).

9. The method according to any one of claims 1 to 8, **characterized in that** the radio identifier (pID) is changed after every approximately 5 to 1000, preferably 20 to 100, status messages (16).

10. The method according to any one of claims 1 to 8, **characterized in that** the radio identifier (pID) is changed at the earliest after expiration of a predetermined time period.

11. The method according to any one of claims 1 to 8, **characterized in that** the radio identifier (pID) is kept the same while the onboard unit (10) is present in the radio coverage range (4) of one and the same radio beacon (3).

12. The method according to any one of claims 1 to 11, **characterized in that** each status message (16) also indicates the current position ($P_i$) and/or a current movement vector ($M_i$) of the onboard unit (10), which is or are also used during the detection of the location usage.

13. The method according to any one of claims 1 to 12, **characterized in that** the current position ($P_i$) of the onboard unit (10) is determined by way of satellite navigation (11) and improved by referencing to a reference position (29) of the radio beacon (3) that was determined by way of satellite navigation.

14. A radio beacon (3) for identifying a vehicle (9) using a predetermined location (5 - 8), the vehicle carrying an onboard unit (10) that via radio repeatedly broadcasts status messages (16), which each indicate a current relative distance ($A_i$) of the onboard unit (10) from the predetermined location (5 - 8) and a radio identifier (pID) that changes after each or several status messages (16), **characterized by** being configured to, with the aid of a processor (17) and a transceiver (18) connected thereto,
receive at least one status message (16);
detect a location usage by evaluating (20) the at least one status message (16) based on the relative distance ($A_i$) indicated therein;
transmit an identification request (22) to that onboard unit (10) which is addressed by way of the radio identifier (pID) from the at least one status message (16); and then
to receive a unique identification (uID) of the onboard unit (10) that remains the same over several radio identifier changes.

15. An onboard unit, comprising a processor (12), a satellite navigation receiver (11) for position determination, and a transceiver (13) for radio communication, wherein the onboard unit (10) is configured to, with the aid of the transceiver (13), repeatedly broadcast via radio status messages (16), which each contain a radio identifier (pID) of the onboard unit (10) that changes after several status changes (16), **characterized by** further being configured to indicate in each status message (16) the current relative distance ($A_i$) from a predetermined location (5 - 8), as determined by way of the satellite navigation receiver (11),
receive, from a radio beacon (3), an identification request (22) that is addressed to the current radio identifier (pID) of the unit and contains a cryptographic sender certificate (23);
validate the sender certificate (23); and if the same is valid,
transmit (25) a unique identification (uID) of the onboard unit (10) to the radio beacon (3), the identification remaining the same over several changes of radio identifier.

**Revendications**

1. Procédé pour l'identification d'un véhicule (9) fréquentant un lieu défini (5 à 8), comprenant :

le transport d'une unité embarquée (10) sur le véhicule (9), qui émet de manière répétée des messages d'état (16) par radio, lesquels indiquent chaque fois une distance relative ($A_i$) actuelle de l'unité embarquée (10) par rapport au lieu défini (5 à 8) et une radio-identification (piD) changeant chaque fois après un ou plusieurs messages d'état (16),
la réception d'au moins un message d'état (16) dans une balise radio (3),
la détection de la fréquentation d'un lieu par le véhicule (9) par l'exploitation d'au moins un message d'état (16) en tenant compte de la distance relative ($A_i$) y étant indiquée,
l'émission d'une demande d'identification (22) à partir de la balise radio (3) vers l'unité embarquée (10) qui est adressée par la radio-identification (pID) à partir d'au moins un message d'état (16),
la réception et le contrôle d'autorisation (24) de la demande d'identification (22) dans l'unité embarquée (10) et, lorsque la demande (22) est autorisée, l'émission (25) d'une identification (uID) unique restant constante sur plusieurs changements de radio-identification de l'unité embarquée (10) vers la balise radio (3).

2. Procédé selon la revendication 1, **caractérisé en ce qu'**une information ($P_0$) concernant le lieu défini (5 à 8) est envoyée à partir de la balise radio (3) vers l'unité embarquée (10) et que celle-ci calcule la distance relative ($A_i$) à partir de celle-ci et de sa position actuelle ($P_i$).

3. Procédé selon la revendication 1, **caractérisé en ce qu'**une information ($P_0$) concernant le lieu défini (5 à 8) est enregistrée dans l'unité embarquée (10) et que celle-ci calcule la distance relative ($A_i$) à partir de celle-ci et de sa position instantanée ($P_i$).

4. Procédé selon l'une des revendications 1 à 3, **caractérisé en ce qu'**au moins deux messages d'état (16) d'une balise radio (3) sont réceptionnés et à l'aide des radio-identifications (pID) y étant indiquées, sont attribués l'un par rapport à l'autre, et
que la fréquentation du lieu par le véhicule (9) est détectée par l'exploitation des messages d'état (16) attribués l'un par rapport à l'autre à l'aide des distances relatives ($A_i$) y étant indiquées.

5. Procédé selon l'une des revendications 1 à 4, **caractérisé en ce que** le contrôle d'autorisation (24) est effectué par l'examen d'un certificat d'émetteur (23) cryptographique envoyé conjointement avec la demande d'identification (22) de la balise radio (3) par la balise radio (3).

6. Procédé selon l'une des revendications 1 à 5, **caractérisé en ce que** l'identification (uID) de l'unité embarquée (10) est envoyée à la balise radio (3) par l'intermédiaire d'un canal crypté (26).

7. Procédé selon l'une des revendications 1 à 6, **caractérisé en ce que** l'identification (uID) réceptionnée dans la balise radio (3) est enregistrée conjointement avec un horodatage (t) dans une mémoire (28) afin d'enregistrer la fréquentation du lieu, ou est au moins comparée avec une identification ($uID_{ref}$) autorisée enregistrée au préalable afin d'autoriser la fréquentation du lieu, ou est employée pour la recherche et pour débiter un compte de péage associé à l'identification (uID) afin de payer un péage pour la fréquentation du lieu.

8. Procédé selon la revendication 7, **caractérisé en ce que** la balise radio (3) envoie (27') une identification de balise (bID) unique pour la balise radio vers l'unité embarquée (10) après l'enregistrement, l'autorisation ou le paiement du péage pour la fréquentation du lieu, laquelle unité embarquée enregistre celle-ci et l'envoie en même temps lors d'au moins une émission suivante de son (ses) message(s) d'état (16) ou de l'envoi de son identification (uID), et que la balise radio (3) ignore un message d'état (16) ou une identification (uID) reçus par une unité embarquée (10) lorsque l'identification de la balise (bID) reçue simultanément est identique à sa propre identification de balise (bID).

9. Procédé selon l'une des revendications 1 à 8, **caractérisé en ce que** la radio-identification (pID) est modifiée après, chaque fois, entre environ 5 et 1000, de préférence, entre 20 et 100 messages d'état (16).

10. Procédé selon l'une des revendications 1 à 8, **caractérisé en ce que** la radio-identification (pID) est modifiée au plus tôt après l'écoulement d'un temps prédéterminé.

11. Procédé selon l'une des revendications 1 à 8, **caractérisé en ce que** la radio-identification (pID) n'est pas modifiée tant que l'unité embarquée (10) se trouve dans la zone de couverture radio (4) d'une seule et même balise radio (3).

12. Procédé selon l'une des revendications 1 à 11, **caractérisé en ce que** chaque message d'état (16) indique également la position actuelle ($P_i$) et/ou un vecteur de mouvement ($M_i$) actuelle de l'unité embarquée (10), laquelle (lequel, lesquel(s)) est (sont) employé(e, s) simultanément lors de la détection de la fréquentation du lieu.

13. Procédé selon l'une des revendications 1 à 12, **caractérisé en ce que** la position actuel ($P_i$) de l'unité embarquée (10) est déterminée au moyen d'une navigation satellite (11) et est améliorée par la prise en compte d'une position de référence (29) de la balise radio (3) déterminée au moyen de la navigation satellite.

14. Balise radio (3) pour l'identification d'un véhicule (9) fréquentant un lieu défini (5 à 8), qui transporte une unité embarquée (10) qui émet de manière répétée des messages d'état (16) par radio, lesquels indiquent chacun une

distance relative actuelle ($A_i$) de l'unité embarquée (10) par rapport au lieu défini (5 à 8), et après respectivement un ou plusieurs messages d'état (16), indiquent des radio-identifications (pID) variables, **caractérisée en ce qu'**elle est conçue, à l'aide d'un processeur (17) et d'un récepteur émetteur (18) qui lui est relié,

pour recevoir au moins un message d'état (16),

pour détecter une fréquentation d'un lieu par l'exploitation (20) d'au moins un message d'état (16) à l'aide de la distance relative ($A_i$) y étant indiquée,

pour émettre une demande d'identification (22) vers l'unité embarquée (10) qui est adressée par la radio-identification (pId) à partir d'au moins un message d'état (16), et ensuite

pour recevoir une identification (uID) unique restant constante sur plusieurs variations de radio-identification de l'unité embarquée (10).

15. Unité embarquée, avec un processeur (12), un récepteur de navigation satellite (11) pour la détermination de la position et un récepteur émetteur (13) pour une communication radio, l'unité embarquée (10) étant conçue pour émettre de manière répétée des messages d'état (16) par radio à l'aide du récepteur émetteur (13), lesquels contiennent chacun une radio-identification (pID) qui varie après plusieurs messages d'état (16) de l'unité embarquée (10), **caractérisée en ce qu'**elle est en outre conçue pour indiquer dans chaque message d'état (16) une distance relative ($A_i$) par rapport au lieu défini (5 à 8) actuel, déterminée au moyen de la réception de navigation satellite (11), pour recevoir une demande d'identification (22), contenant un certificat d'émetteur (23) cryptographique de la balise radio (3) et étant adressée à sa radio-identification (pID) instantanée,

pour valider (24) un certificat d'émetteur (23) et, lorsqu'il est validé,

pour envoyer (25) une identification (uID) explicite restant constante sur plusieurs variations de radio-identification de l'unité embarquée (10) vers la balise radio (3).

*Fig. 1*

EP 2 660 794 B1

*Fig. 2*

EP 2 660 794 B1

OBU

26

RSE

$CAM_1(pID_1, A_1, P_1, M_1, bID, ...)$  16

$CAM_2(pID_1, A_2, P_2, M_2, bID, ...)$

$CAM_3(pID_1, A_3, P_3, M_3, bID, ...)$

$CAM_4(pID_2, A_4, P_4, M_4, bID, ...)$

$CAM_5(pID_2, A_5, P_5, M_5, bID, ...)$

$\vdots$

$CAM_i(pID_n, A_i, P_i, M_i, bID, ...)$  16

24

$Id\_Req(pID_n, sID, Cert)$  22

25

$Id\_Rsp(sID, uID, bID)$

$Svc\_Msg(uID, sID, data...)$  27

$\vdots$

$ok(bID)$  27'

10

3

*Fig. 3*

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1519320 A1